# EUROPÄISCHE PATENTANMELDUNG

(11) **EP 4 403 898 A1**
(43) Veröffentlichungstag der Anmeldung: **24.07.2024**
(21) Anmeldenummer: 24152909.8
(22) Anmeldetag: 19.01.2024
(51) Int. Cl.: G01N 1/28, G01N 1/40, G01N 15/08

(54) **VERFAHREN UND AUFNAHMERAUM ZUR OPTISCHEN AUFZEICHNUNG VON MIKROPARTIKELN UND VERWENDUNG EINER BEWEGUNGSKOMPONENTE ZUR ENTFERNUNG EINES ABDECKELEMENTS VOR EINER AUFZEICHNUNG**

(30) Priorität: 20.01.2023 DE 102023101477
(71) Anmelder: Testo bioAnalytics GmbH, 79822 Titisee-Neustadt (DE)
(72) Erfinder: Münzer, Markus, 79856 Hinterzarten (DE)
(74) Vertreter: Mertzlufft-Paufler, Cornelius

(57) **Zusammenfassung**

Die Erfindung schlägt somit allgemein ein Verfahren in einem Aufnahmeraum (3) zur Aufzeichnung von Mikropartikeln (1) vor, wobei die Mikropartikel (1), vorzugsweise in einem Fluid (4), vor der optischen Aufzeichnung in den nach außen abgeschlossenen Aufnahmeraum (3) überführt werden und wobei der Aufnahmeraum (3) vor der Aufzeichnung nach außen geöffnet wird. Ein derartiges erfindungsgemäßes Verfahren bzw. ein erfindungsgemäßer Aufnahmeraum (3) sind insbesondere zur Aufzeichnung und Analyse von Mikropartikeln (1) in der Pharmazie und Lebensmittelindustrie von Interesse, jedoch nicht auf diese Industriezweige beschränkt

## Beschreibung

Die Erfindung betrifft ein Verfahren zur optischen Aufzeichnung von Mikropartikeln in einem Aufnahmeraum, wobei die Mikropartikel, vorzugsweise in einem Fluid, vor der optischen Aufzeichnung in den nach außen abgeschlossenen Aufnahmeraum überführt werden.

Die Erfindung betrifft weiter einen Aufnahmeraum, insbesondere einer Mikrofluidik, zur optischen Aufzeichnung von Mikropartikeln auf einer Membran.

Verfahren und Aufnahmeräume zur Aufzeichnungen von Mikropartikeln sind bekannt und finden häufig Verwendung in der Diagnostik, vorzugsweise in der Lebensmittelindustrie, in der pharmazeutischen Produktion und in der Medizin. Bei bekannten Verfahren werden Mikropartikel häufig in einem Fluid auf eine Membran, die sich in dem Aufnahmeraum befindet, überführt und gesammelt. Üblicherweise sind die Aufnahmeräume mit einem transparentem Abdeckelement überdeckt und abgedichtet. Müssen bei der Aufzeichnung schwache Mikropartikel detektiert werden, z.B. im Zuge von Fluoreszenzmessungen, müssen aufgrund des Abdeckelements aufwendige und zeitintensive Korrekturen vorgenommen werden. Ein Abdeckelement zwischen Detektor und Mikropartikel ist somit für eine optimale Analyse einer Umweltprobe beeinträchtigend und kann sogar dazu führen, dass wenig abundante Mikropartikel überhaupt nicht detektiert werden können.

Die Erfindung betrifft ferner eine Verwendung einer drehbaren und/oder schwenkbaren Bewegungskomponente zur Entfernung eines Abdeckelements vor einer Aufzeichnung.

Es ist daher Aufgabe der Erfindung Aufzeichnungen von Mikropartikeln zu verbessern.

Zur Lösung der genannten Aufgabe sind erfindungsgemäß die Merkmale des Anspruchs 1 vorgesehen. Insbesondere wird somit zur Lösung der genannten Aufgabe bei einem Verfahren der eingangs beschriebenen Art erfindungsgemäß vorgeschlagen, dass der Aufnahmeraum vor der Aufzeichnung nach außen geöffnet wird. Somit kann eine Aufzeichnung ohne ein Abdeckelement durchgeführt werden, dass ansonsten zwischen den im Aufnahmeraum befindlichen Mikropartikeln und einem Detektor positioniert wäre. Dadurch können aufwendige und zeitintensive Korrekturen reduziert bzw. sogar vermieden werden. Generell können durch die Öffnung des Aufnahmeraums nach außen besonders schwache Signale und/oder wenig abundante Mikropartikel aufgezeichnet werden, was von Vorteil, insbesondere bei Fluoreszenzmessungen, ist. Es kann somit die Aufzeichnung von Mikropartikeln durch ein erfindungsgemäßes Verfahren verbessert werden.

Eine (nicht abschließende) Liste von Mikropartikeln kann beispielsweise umfassen: lebende oder organische Materie, insbesondere Mikroorganismen wie Bakterien, Pilze und Protozoen, und Viren sowie Teile davon, und tote oder anorganische Materie, beispielsweise Staub- und/oder Rußpartikel.

Bei einem erfindungsgemäßen Verfahren kann der Aufnahmeraum reversibel nach außen oder dauerhaft geöffnet werden, wodurch ein Verfahren flexibel an die gegebenen Bedingungen bzw. Benutzerwünsche anpassbar sein kann.

Beim Überführen der Mikropartikel in den Aufnahmeraum ist dieser abgeschlossen, sodass die Mikropartikel und/oder das Fluid nicht nach außen dringen können, sodass die außerhalb des Aufnahmeraums befindlichen Elemente, wie beispielsweise ein Detektor, nicht angegriffen bzw. beschädigt werden. Hierdurch kann bei einem erfindungsgemäßen Verfahren eine sicherer Zuführung der Mikropartikel in den Aufnahmeraum bei gleichzeitig optimierter Detektion der Mikropartikel realisiert werden, wodurch eine Aufzeichnung der Mikropartikel besonders verbessert werden kann.

Gemäß einer vorteilhaften Ausgestaltung des Verfahrens kann vorgesehen sein, dass der Aufnahmeraum zum Überführen der Mikropartikel mit dem Fluid gefüllt wird. Hierdurch können besonders viele Mikropartikel in den Aufnahmeraum überführt und aufgezeichnet werden. Ferner können die Mikropartikel in dem Fluid so geschützt bzw. aufrecht gehalten werden, dass eine Aufzeichnung verbessert wird. So kann vorgesehen sein, dass die Mikropartikel in dem Fluid vorbehandelt überführt werden und/oder in dem Aufnahmeraum (weiter) vorbehandelt werden, bevor eine Aufzeichnung durchgeführt wird.

Insbesondere kann vorgesehen sein, dass ein Abdeckelement des Aufnahmeraums zumindest teilweise durch das Fluid benetzt wird. Dabei kann vorteilhaft ein Volumen des Aufnahmeraums optimal mit dem Fluid befüllt werden, sodass eine Aufzeichnung möglichst aller Mikropartikel einer zu untersuchenden Umweltprobe ermöglicht wird.

Gemäß einer vorteilhaften Ausgestaltung des Verfahrens kann vorgesehen sein, dass vor der Öffnung das Fluid im Aufnahmeraum entfernt wird. Hierdurch kann verhindert werden, dass durch die Öffnung Fluid aus dem Aufnahmeraum nach außen dringt und sensible Geräte, wie ein Detektor, beschädigt werden. Somit kann ein Verfahren wiederholbar und langlebig realisiert werden.

Gemäß einer vorteilhaften Ausgestaltung des Verfahrens kann vorgesehen sein, dass wenigstens eine Bewegungskomponente der Öffnungsbewegung längs einer durch das Abdeckelement verschlossenen Öffnung durchgeführt wird. Hierdurch kann vorteilhaft gewährleistet sein, dass das Abdeckelement vollständig oder zumindest so weit aus der Öffnung bewegt wird oder bewegbar ist, dass eine Aufzeichnung durchgeführt werden kann.

Alternativ oder zusätzlich kann vorgesehen sein, dass die Öffnung an einem, beispielsweise dem bereits erwähnten, Abdeckelement automatisiert geöffnet wird. Hierdurch kann vorteilhaft sein, dass das Abdeckelement durch eine Öffnungsmechanik automatisiert bewegt wird, wodurch ein händisches Eingreifen nicht mehr notwendig ist. Dadurch können ein Benutzter bzw. die zu untersuchenden Mikropartikel geschützt werden.

Gemäß einer vorteilhaften Ausgestaltung des Verfahrens kann vorgesehen sein, dass die wenigstens eine Bewegungskomponente außerhalb des Aufnahmeraums durchgeführt wird. Somit kann eine Öffnung des Aufnahmeraums nach außen durchgeführt werden, ohne dass die wenigstens eine Bewegungskomponente innerhalb des Aufnahmeraums realisiert würde. So können insbesondere eine Öffnungsmechanik und/oder ein Greifelement so realisiert sein, dass sie zumindest während einer Öffnungsbewegung nicht in bzw. über die Öffnung ragen. Dadurch kann vorteilhaft verhindert werden, dass der Aufnahmeraum während der Öffnung durch beispielsweise Abrieb verunreinigt wird. Ebenso kann der Aufnahmeraum platzsparend ausgebildet werden, da die wenigstens eine Bewegungskomponente außerhalb durchgeführt wird, was ein Verfahren verbessert.

Die Bewegungskomponente kann sich vorzugsweise um eine Rotationsachse bewegen. Somit kann das Abdeckelement eine Öffnungsbewegung durchführen, ohne in den Raum außerhalb des Aufnahmeraums zu greifen bzw. zu gelangen. Dadurch ist eine Positionierung bzw. eine Bewegung eines Bauteils, beispielsweise eines Detektors, außerhalb des Aufnahmeraums möglich, was von Vorteil ist.

Gemäß einer vorteilhaften Ausgestaltung des Verfahrens kann vorgesehen sein, dass eine zweite Bewegungskomponente an der ersten Bewegungskomponente angreift und vorzugsweise die erste Bewegungskomponente in eine Drehbewegung versetzt. Hierbei kann die zweite Bewegungskomponente vorteilhaft an der ersten Bewegungskomponente angreifen, um das Abdeckelement zu entfernen. Hierdurch kann ein Entfernen des Abdeckelements besonders fein abgestimmt und/oder steuerbar sein.

Insbesondere kann dabei vorgesehen sein, dass die zweite Bewegungskomponente sich vorzugsweise um eine zweite Rotationsachse bewegt. Somit kann vorteilhaft eine Drehbewegung benutzt werden, um der ersten Bewegungskomponente einen Impuls zur Entfernung des Abdeckelements zu setzen.

Alternativ oder zusätzlich können die erste und die zweite Bewegungskomponente sich vorzugsweise in gegensinnige Drehbewegungen bewegen. Hierdurch kann sich ein Angriffspunkt der ersten und der zweiten Bewegungskomponente lösen, sodass eine Öffnungsbewegung des Abdeckelements pausiert und/ oder gestoppt werden kann.

Gemäß einer vorteilhaften Ausgestaltung des Verfahrens kann vorgesehen sein, dass wenigstens eine Bewegungskomponente vorzugsweise eine Zugbewegung durchführt, um ein als vorzugweise selbstklebende Abdeckfolie ausgebildetes Abdeckelement aus der Öffnung zu entfernen. Hierdurch kann vorteilhaft ein Abdeckelement, vorzugsweise eine Abdeckfolie, aus der Öffnung gezogen werden.

Gemäß einer vorteilhaften Ausgestaltung des Verfahrens kann vorgesehen sein, dass das Verfahren in einem fluidischen Kanalsystem durchgeführt wird. Hierdurch kann ein Verfahren mit einem geringen Volumen durchgeführt werden, wodurch ein Abdeckelement relativ klein und kostengünstig ausgebildet sein kann.

Insbesondere kann das Verfahren in einer Mikrofluidik durchgeführt werden. Hierdurch kann eine Mikroumgebung der Mikrofluidik steuerbar ausgestaltet sein, wodurch vielfältige Verarbeitung- und/oder Detektionsprozesse des Verfahrens schnell und kostengünstig durchgeführt werden können.

Alternativ oder zusätzlich sind zur Lösung der genannten Aufgabe erfindungsgemäß die Merkmale des nebengeordneten, auf einen Aufnahmeraum gerichteten Anspruchs vorgesehen. Insbesondere wird somit zur Lösung der genannten Aufgabe bei einem Aufnahmeraum der eingangs beschriebenen Art erfindungsgemäß vorgeschlagen, dass der Aufnahmeraum mit einem entfernbaren Abdeckelement verschlossen ist. Unter einem entfernbaren Abdeckelement kann ein Abdeckelement gemeint sein, das zumindest während einer Aufzeichnung dauerhaft aus dem Aufnahmeraum entfernt ist. Vorteilhaft bei einem entfernbaren Abdeckelement kann jedenfalls sein, dass bei einer Überführung eines Fluids der Aufnahmeraum durch das Abdeckelement abgeschlossen und abgedichtet sein kann. Zusätzlich kann durch ein entfernbares Abdeckelement eine Aufzeichnung von Mikropartikeln dahingehend verbessert werden, dass das Abdeckelement nicht störend zwischen den Mikropartikeln und einem Detektor positioniert ist.

Insbesondere kann ein entfernbares Abdeckelement einen Aufnahmeraum gemäß einem zuvor beschriebenen oder nachfolgend beanspruchten Verfahren nach außen öffnen. Somit kann ein Aufnahmeraum besonders vielfältig und vorteilhaft genutzt werden, um Mikropartikel aufzuzeichnen.

Das entfernbare Abdeckelement ist vorzugsweise so ausgebildet, dass Vorrichtungen, beispielsweise ein Detektor, durch das Entfernen des Abdeckelements zur Öffnung des Aufnahmeraums nicht beeinträchtigt werden, was vorteilhaft ist. Somit kann ein Aufnahmeraum an einen Detektionsbereich angepasst sein, um vorzugsweise ein erfindungsgemäßes Verfahren durchführen zu können.

Gemäß einer alternativen Ausführungsform kann vorgesehen sein, dass das Abdeckelement als vorzugsweise selbstklebende Abdeckfolie ausgebildet ist. Dabei kann die Zusammensetzung und/ oder die Klebekraft der Abdeckfolie an ein Material des Aufnahmeraums angepasst sein, sodass die Abdeckfolie den Aufnahmeraum verschließt und abdichtet. Ein weiterer Vorteil bei einer selbstklebenden Abdeckfolie ergibt sich durch eine relativ dünne Ausbildung, sodass nach außen hin Platz eingespart werden kann.

Die selbstklebende Abdeckfolie kann insbesondere als Schlaufe ausgebildet sein. Hierdurch kann eine Abziehkraft zum Entfernen der selbstklebenden Abdeckfolie auf ein Minimum reduziert werden. Dies ist insbesondere dann von Vorteil, wenn die Abdeckfolie durch vorzugsweise eine Zugbewegung, beispielsweise durch einen drehbaren und/oder schwenkbaren Arm durchgeführt, aus der Öffnung entfernt wird.

Gemäß einer alternativen Ausführungsform kann vorgesehen sein, dass das Abdeckelement wenigstens im Bereich einer Öffnung des Aufnahmeraums aus einem transparentem Material ausgebildet ist. Somit kann beispielsweise ein "Pre-Screening" durchgeführt werden, um den Überführungsprozess der Mikropartikel in den Aufnahmeraum aufzuzeichnen. Ferner können die Mikropartikel einer kostbaren Umweltprobe auch bei einer fehlerhaften und/oder unzureichenden Entfernung des Abdeckelements aufgezeichnet werden, was vorteilhaft ist.

Gemäß einer alternativen Ausführungsform kann vorgesehen sein, dass die Öffnung so groß wie ein Bereitstellungsbereich ist, in dem die Mikropartikel bereitgestellt werden können. Hierdurch können bei einer Aufzeichnung alle im Bereitstellungsbereich befindlichen Mikropartikel durch die Öffnung gleichzeitig aufgezeichnet werden, wodurch die Aufzeichnung besonders schnell durchgeführt werden kann.

Gemäß einer alternativen Ausführungsform kann vorgesehen sein, dass das Abdeckelement an einem Greifelement temporär oder dauerhaft befestigt ist. Durch eine temporäre Befestigung des Abdeckelements an das Greifelement kann das Abdeckelement durch eine Bewegung des Greifelements entfernt werden, sodass der Aufnahmeraum vorteilhaft nach außen geöffnet wird. Bei einer dauerhaften Befestigung kann ein zusätzlicher Vorteil sein, dass das Abdeckelement alternativ oder zusätzlich über den Greifarm an den Aufnahmeraum befestigt werden kann.

Insbesondere kann das Abdeckelement an einem drehbaren und/oder schwenkbaren Arm temporär oder dauerhaft befestigt sein. Somit kann das Abdeckelementdurch eine Dreh- und/oder Schwenkbewegung aus der Öffnung entfernt werden, was insbesondere vorteilhaft bei der Entfernung von einer, wie zuvor beschriebenen oder nachfolgend beanspruchten, Abdeckfolie ist.

Gemäß einer alternativen Ausführungsform kann vorgesehen sein, dass das Greifelement das Abdeckelement vorzugsweise vollständig abdeckt. Somit kann das Abdeckelement zumindest teilweise, insbesondere jedoch vollständig, von dem Greifelement vor Schäden geschützt sein, was insbesondere von Vorteil bei einer wie zuvor beschriebenen oder nachfolgend beanspruchten Abdeckfolie ist.

Gemäß einer alternativen Ausführungsform kann vorgesehen sein, dass eine bewegbare Vorrichtung zumindest temporär an dem Greifelement zum Entfernen des Abdeckelements angreifen kann. Somit kann eine bewegbare Vorrichtung vorteilhaft an dem Greifelement angreifen, um das Abdeckelement zu entfernen. Dabei kann das bewegbare Element in verschiedenen Freiheitsgraden bewegbar ausgebildet sein, um eine besonders vielfältige Funktionalität zu gewährleisten.

Insbesondere kann dabei vorgesehen sein, dass ein Angriffspunkt zur Übertragung eines Drehmoments der bewegbaren Vorrichtung auf das Greifelement ausgebildet ist. Somit kann das bewegbare Element besonders vorteilhaft zur Ausführung eines Verfahrens geeignet sein, bei dem, wie zuvor bereits beschrieben und nachfolgend beansprucht, eine zweite Bewegungskomponente an eine erste Bewegungskomponente angreift.

Gemäß einer alternativen Ausführungsform kann vorgesehen sein, dass der Aufnahmeraum einen Zulauf und/oder Ablauf hat. Dies ist insbesondere dann vorteilhaft, wenn die Mikropartikel in einem Fluid zur Membran hin überführt werden. So kann ein Fluid über den Zulauf in den Aufnahmeraum gelangen und zu der Membran hin überführt werden. Der Ablauf kann zur Entfernung überschüssigen Fluids oder zur Weiterleitung des Fluids ausgebildet sein.

Vorzugsweise ist die Membran zwischen Zulauf und Ablauf positioniert. Bevorzugt ist dabei die Membran unterhalb des Zulaufs und oberhalb des Ablaufs angeordnet, wodurch vorteilhaft Flüssigkeit in den Ablauf tropfen und aus dem Aufnahmeraum entweichen kann. Insgesamt kann also ein Aufnahmeraum besonders variabel durch einen Zulauf und oder Ablauf ausgestaltet sein, wobei unterschiedlichste Verfahren, wie zuvor beschrieben und/oder nachfolgend beansprucht, durchgeführt werden können.

Gemäß einer alternativen Ausführungsform kann vorgesehen sein, dass der Zulauf beabstandet zu dem Abdeckelement in dem Aufnahmeraum mündet. Hierdurch kann eine Benetzung des Abdeckelements vermieden werden, wenn ein Fluid dem Aufnahmeraum zugeführt wird. Vorteilhaft daran kann sein, dass beim Entfernen des Abdeckelements kein Fluid nach außen gelangt, wodurch außerhalb des Aufnahmeraums Verschmutzungen und/oder Kontaminationen verringert bzw. verhindert werden können.

Gemäß einer alternativen Ausführungsform kann vorgesehen sein, dass zwischen Zulauf und Ablauf der Aufnahmeraum breiter ausgebildet ist. Somit kann eine Aufzeichnungsfläche größer als eine transversale Transportfläche der Mikropartikel ausgebildet sein, was insbesondere dann vorteilhaft ist, wenn Mikropartikel im Aufnahmeraum gesammelt werden. Somit können bei einem breiteren Aufnahmeraum nämlich besonders viele oder gar alle Mikropartikel einer Umweltprobe gesammelt werden, wodurch eine Aufzeichnung besonders akkurat sein kann.

Gemäß einer alternativen Ausführungsform kann vorgesehen sein, dass der Aufnahmeraum eine Entlüftungsstruktur aufweist, die zumindest teilweise außerhalb der Öffnung ragt. Somit kann der Aufnahmeraum entlüftet und druckentlastet werden, was besonders vorteilhaft bei einem Aufnahmeraum ist, der als Teil einer wie nachfolgend beschriebenen und/oder beanspruchten Mikrofluidik ausgebildet ist.

Vorzugsweise ragt die Entlüftungsstruktur in eine zur Öffnung verschiedenen Ebene. Somit kann verhindert werden, dass eine Flüssigkeit aus dem Aufnahmeraum überläuft, insbesondere, wenn ein Ausgang der Entlüftungsstruktur über einem Zulauf des Aufnahmeraums positioniert ist.

Insbesondere kann vorgesehen sein, dass die Entlüftungsstruktur durch das Abdeckelement verschließbar ist. Somit kann die Belüftungsstruktur vorteilhaft durch das entfernbare Abdeckelement verschlossen sein.

Gemäß einer alternativen Ausführungsform kann vorgesehen sein, dass sich der Aufnahmeraum in einem fluidischen Kanalsystem befindet. Somit können kleine Probenvolumina einer Umweltprobe analysiert werden.

Dabei kann der Aufnahmeraum insbesondere als Teil einer Mikrofluidik ausgebildet sein, wobei die Mikrofluidik vorzugsweise als Teil eines scheibenförmigen Probenträgers ausgebildet ist. Somit kann ein kleines Volumen zur Aufzeichnung von Mikropartikeln in einem Verfahren, insbesondere wie zuvor beschrieben oder nachfolgend beansprucht, schnell und automatisiert durchgeführt werden.

Ferner kann ein scheibenförmiger Probenträger zur Zentrifugation ausgebildet sein. Hierdurch kann eine Aufzeichnung von Mikropartikeln besonders vorteilhaft durch zentrifugale Mikrofluidik automatisiert werden, was sehr vorteilhaft ist.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe bei einer Verwendung der eingangs beschriebenen Art erfindungsgemäß vorgeschlagen, dass die drehbare und/oder schwenkbare Bewegungskomponente vorzugsweise in einem Aufnahmeraum, wie zuvor beschrieben oder nachfolgend beansprucht und/oder bei einem wie zuvor beschriebenen oder nachfolgend beanspruchten Verfahren, zur Entfernung eines Abdeckelements vor einer Aufzeichnung verwendet wird. Durch eine drehbare und/oder schwenkbare Bewegungskomponente kann ein Abdeckelement vorteilhaft einen Aufnahmeraum nach außen hin öffnen, ohne dass das Abdeckelement bei der Öffnungsbewegung in den Raum außerhalb des Aufnahmeraums greift bzw. geführt wird. Dies kann insbesondere dann von Vorteil sein, wenn der Aufnahmeraum Teil eines Detektionsbereichs ist, da somit der Raum außerhalb des Aufnahmeraums frei sein kann, um andere Bauteile, beispielsweise wenigstens einen Detektor, zu positionieren.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine Seitenansicht eines fluidischen Kanalsystems mit einem erfindungsgemäßen Aufnahmeraum,
- Fig. 2: eine Aufsicht auf einen erfindungsgemäßen Aufnahmeraum mit einem entfernbaren Abdeckelement,
- Fig. 3: eine Aufsicht auf einen erfindungsgemäßen Aufnahmeraum mit einer alternativen Ausführungsform eines entfernbaren Abdeckelements,
- Fig. 4: einen scheibenförmigen Probenträger mit Mitteln zur Ausführung eines erfindungsgemäßen Verfahrens und einem erfindungsgemäßen Aufnahmeraum.

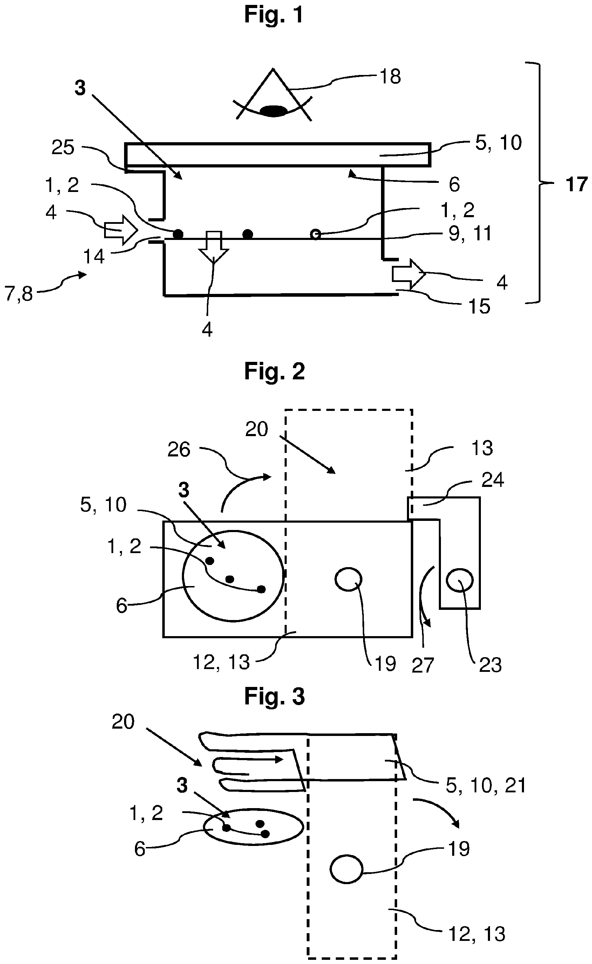

Figur 1 zeigt einen erfindungsgemäßen Aufnahmeraum 3, der zur Ausführung eines wie zuvor beschriebenen oder nachfolgend beanspruchten Verfahrens zur Aufzeichnung von Mikropartikeln 1 geeignet ist.

Im Nachfolgenden werden Vorrichtungsmerkmale eines erfindungsgemäßen Aufnahmeraums 3 sowie ein darin ausführbares Verfahren beschrieben.

Der Aufnahmeraum 3 ist als Bestandteil einer Mikrofluidik 8 ausgebildet. Es ist auch möglich, dass der Aufnahmeraum 3 zur Aufzeichnung von Mikropartikeln 1 in einem fluidischen Kanalsystem 7 ist, das nicht als Mikrofluidik 8 ausgebildet ist.

Der Aufnahmeraum 3 der Figur 1 ist durch ein entfernbares Abdeckelement 5 verschlossen. Dabei kann das Abdeckelement 5 als selbstklebende Abdeckfolie 10 ausgebildet sein, wie sie in den Figuren 2 und 3 dargestellt ist. Die in Figur 3 dargestellte Abdeckfolie 10 ist als Schlaufe 21 realisiert, wodurch vorteilhaft eine Abziehkraft auf ein Minimum reduziert werden kann. Somit kann ein Greifelement 12, wie beispielsweise ein drehbarer und/ oder schwenkbarer Arm 13, die selbstklebende Abdeckfolie 10 relativ leicht aus der Öffnung 6 des Aufnahmeraums 3 entfernen, um den Aufnahmeraum 3 vor der Aufzeichnung nach außen zu öffnen.

Ein Abdeckelement 5, 10 kann ferner auch , wie zumindest in Figur 2 dargestellt, durch das Greifelement 10 bedeckt sein, sodass das Abdeckelement 5, 10 geschützt ist. Somit kann ein Aufnahmeraum besonders langlebig sein.

Die Abdeckfolie 10 (durchgehendes Rechteck) der in Figur 2 gezeigten Ausführungsform befindet sich über der Öffnung 6 des Aufnahmeraums 3. Durch eine Drehbewegung des drehbaren Arms 13 um eine Rotationsachse 19 kann die Abdeckfolie 10 in eine Öffnungsposition 20 (gestricheltes Dreieck) geschoben bzw. überführt werden. Dabei kann, wie in Figur 2 dargestellt, eine bewegbare Vorrichtung 24 an dem drehbaren Arm angreifen. Durch eine Drehbewegung der bewegbaren Vorrichtung 24 um eine Rotationsachse 23 kann durch das Angreifen ein Impuls auf den drehbaren Arm 13 gesetzt werden, sodass der drehbare Arm 13 die Abdeckfolie 10 verschieben kann. Dabei drehen sich der drehbare Arm 13 und die bewegbare Vorrichtung 24 vorzugsweise gegensinnig (Pfeildarstellungen mit den Bezugszeichen 26, 27 der Figur 2), wodurch ein Angriffspunkt von drehbaren Arm 13 und bewegbarer Vorrichtung 24 vorteilhaft gelöst werden kann.

Es kann auch vorgesehen sein, dass sich ein Abdeckelement 5, wie die in Figur 3 gezeigte Schlaufe 10, 21, infolge einer Schwenkbewegung des Greifelements 12, 13, aus der Öffnung 6 gelöst und zu einer Öffnungsposition 20 geklappt wird. Somit kann eine selbstklebende Schlaufe 10, 21 einfach aus der Öffnung 6 gezogen werden, wodurch eine besonders einfache Entfernung eines Abdeckelements 5 vor der Aufzeichnung der Mikropartikel 1 realisiert sein kann.

So kann, wie in den Ausführungsformen der Figuren 1 bis 3 gezeigt, eine dreh- und/oder schwenkbare Bewegungskomponente zur Entfernung eines Abdeckelements 5 vor einer Aufzeichnung in einem Aufnahmeraum 3 Verwendung finden. Vorzugsweise findet diese Verwendung bei einem erfindungsgemäßen Verfahren statt.

Ferner ist in den Ausführungsformen der Figuren 2 und 3 zu erkennen, dass wenigstens eine Bewegungskomponente der Öffnungsbewegung längs einer durch das Abdeckelement 5 verschlossenen Öffnung 6 des Aufnahmeraums 3 durchgeführt wird. Dabei sind die Abdeckfolien 10 der Ausführungsformen der Figuren 2 und 3 dauerhaft mit einem Greifelement 12 verbunden, das sich um eine außerhalb des Aufnahmeraums 3 befindlichen Rotationsachse 19 bewegen kann. Eine temporäre Verbindung eines Abdeckelements 5 an ein Greifelement 12 kann jedoch auch vorgesehen sein, sodass eine Öffnungsbewegung sogar reversibel sein kann.

Generell können Greifelement 12 und das Abdeckelement 5 optimal aneinander angepasst sein, um das Abdeckelement 5 durch eine Öffnungsbewegung aus der Öffnung 6 zu entfernen. Neben einer Dreh- und/oder Schwenkbewegung kann also jede dem Fachmann bekannte Bewegungskomponente verwendet werden, um das Abdeckelement 5 nach außen zu öffnen.

Bei einem erfindungsgemäßen Verfahren, das wie folgt ablaufen könnte, könnten in einem Fluid 4 befindliche Bakterien 2 dem Aufnahmeraum 3 über einen Zulauf 14 zugeführt werden (vgl. Figur 1). Dabei werden die Bakterien 2 auf einer unterhalb des Zulaufs 14 befindlichen Membran 9 gesammelt, wobei die Membran 9 einen Bereitstellungsbereich 11 ausbildet, dessen Umfang so groß wie die Öffnung 6 des Aufnahmeraums 3 ist.

Abhängig vom Volumen des Fluids 4 kann das Abdeckelement 5, 10 zumindest teilweise durch das Fluid 4 benetzt werden, selbst dann, wenn der Zulauf 14 beabstandet zum Abdeckelement 5, 10 in den Aufnahmeraum 3 mündet (vgl. Figur 1). Währenddessen das Fluid 4 in den Aufnahmeraum 3 überführt wird, wird der Aufnahmeraum 3 durch das Abdeckelement 5, 10 abgedichtet, sodass das Fluid 4 nicht durch die Öffnung 6 treten kann.

Ferner wird der Aufnahmeraum 3 durch eine Entlüftungsvorrichtung 25 entlüftet, wodurch der Druck in dem Aufnahmeraum 3 vorteilhaft reguliert werden kann, insbesondere bei einer Befüllung des Aufnahmeraums 3. Die Entlüftungsvorrichtung 25 ist dabei so ausgebildet bzw. angeordnet, dass selbst bei einer vollständigen Befüllung des Aufnahmeraums 3 keine Flüssigkeit über die Entlüftungsvorrichtung 25 entweichen kann. So kann die Entlüftungsvorrichtung 25 beispielsweise außerhalb der Öffnung 6 ragen. Zusätzlich wird, wie in Figur 1 gezeigt, die Entlüftungsvorrichtung 25 durch das Abdeckelement 5, 10 verschlossen, sodass lediglich eine Entlüftungsöffnung offen gehalten sein kann.

Das Fluid 4 kann über einen unterhalb der Membran 9, 11 positionierten Ablauf 15 zumindest vor der Aufzeichnung aus dem Aufnahmeraum 3 entfernt werden.

Da das Abdeckelement 5, 10 der Figur 1 zumindest im Bereich der Öffnung 6 transparent ausgebildet sein kann, könnte ein im Detektionsbereich 17 befindlicher Detektor 18 ein "Pre-Screening" der Mikropartikel 1, 2 durchführen, um beispielsweise die Bereitstellung der Mikropartikel 1, 2 auf der Membran 9 zu erfassen. Hierfür könnte das Abdeckelement 5, 10 weiterhin die Öffnung 6 des Aufnahmeraums 3 in Verschluss halten. Wenigstens vor der Aufzeichnung der Mikropartikel 1, 2 sind der Aufnahmeraum 3 und der Detektor 18 im Detektionsbereich 17 auf unterschiedlichen Seiten des entfernbaren Abdeckelements 5, 10 positioniert.

Zur Aufzeichnung der Mikropartikel 1, 2 wird das Abdeckelement 5, 10 erfindungsgemäß aus der Öffnung 6 nach außen entfernt, sodass Aufzeichnungen vorteilhaft ohne aufwendige und zeitintensive Korrekturen vorgenommen werden können. Generell können durch die Öffnung 6 des Aufnahmeraums 3 nach außen besonders schwache Signale und/oder wenig abundante Mikropartikel 1, 2 durch einen Detektor 18 aufgezeichnet werden. Es kann nämlich vorgesehen sein, dass die Mikropartikel 1, 2, vorzugsweise auf der Membran 9, 11, durch wenigstens einen Verarbeitungsschritt, beispielsweise eine Fixierung und/oder Konditionierung und/oder Färbung der Mikropartikel 1, 2 und/oder eine Hintergrundreduktion und/oder eine thermische und/oder optische Anregung, vorbehandelt werden. Hierdurch können die Mikropartikel 1, 2 spezifisch nachweisbar sein, auch wenn das nachzuweisende Signal relativ schwach ausgebildet wäre. Somit kann durch ein erfindungsgemäßes Verfahren in einem vorzugsweise erfindungsgemäßen Aufnahmeraum 3 durch Öffnung des Abdeckelements 5, 10 nach außen die Aufzeichnung von Mikropartikeln 1, 2 verbessert werden.

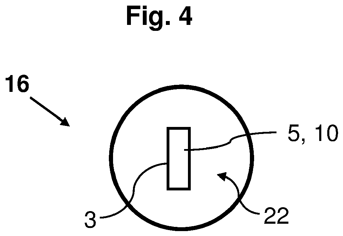

Figur 4 zeigt einen scheibenförmigen Probenträger 16 mit einer wie zuvor beschriebenen Mikrofluidik 8, aufweisend einen wie zuvor beschriebenen Aufnahmeraum 3 (vgl. Figur 1). Ferner kann der scheibenförmige Probenträger 16 weitere Mittel 22 zur Ausführung eines wie zuvor beschriebenen oder nachfolgend beanspruchten Verfahrens ausbilden. Der scheibenförmige Probenträger 16 der Figur 4 ist zur Zentrifugation geeignet, wodurch eine Aufzeichnung von Mikropartikeln 1, 2 besonders vorteilhaft durch zentrifugale Mikrofluidik 8 automatisiert ausführbar sein kann.

Die Erfindung schlägt somit allgemein ein Verfahren in einem Aufnahmeraum 3 zur Aufzeichnung von Mikropartikeln 1 vor, wobei die Mikropartikel 1, vorzugsweise in einem Fluid 4, vor der optischen Aufzeichnung in den nach außen abgeschlossenen Aufnahmeraum 3 überführt werden und wobei der Aufnahmeraum 3 vor der Aufzeichnung nach außen geöffnet wird. Ein derartiges erfindungsgemäßes Verfahren bzw. ein erfindungsgemäßer Aufnahmeraum 3 sind insbesondere zur Aufzeichnung und Analyse von Mikropartikeln 1 in der Pharmazie und Lebensmittelindustrie von Interesse, jedoch nicht auf diese Industriezweige beschränkt.

### Bezugszeichenliste

- 1: Mikropartikel
- 2: Bakterien
- 3: Aufnahmeraum
- 4: Fluid
- 5: Abdeckelement
- 6: Öffnung von 3
- 7: fluidisches Kanalsystem
- 8: Mikrofluidik
- 9: Membran
- 10: Abdeckfolie
- 11: Bereitstellungsbereich für 1,2
- 12: Greifelement
- 13: drehbarer und/oder schwenkbarer Arm
- 14: Zulauf
- 15: Ablauf
- 16: scheibenförmiger Probenträger
- 17: Detektionsbereich
- 18: Detektor
- 19: Rotationsachse
- 20: Öffnungsposition
- 21: Schlaufe
- 22: Mittel zur Ausführung eines erfindungsgemäßen Verfahrens
- 23: zweite Rotationsachse
- 24: bewegbare Vorrichtung
- 25: Entlüftungsstruktur
- 26: Drehrichtung von 12, 13
- 27: Drehrichtung von 24

## Patentansprüche

1. Verfahren zur optischen Aufzeichnung von Mikropartikeln (1) in einem Aufnahmeraum (3), wobei die Mikropartikel (1), vorzugsweise in einem Fluid (4), vor der optischen Aufzeichnung in den nach außen abgeschlossenen Aufnahmeraum (3) überführt werden, **dadurch gekennzeichnet, dass** der Aufnahmeraum (3) vor der Aufzeichnung nach außen geöffnet wird.

2. Verfahren nach Anspruch 1, **dadurch gekennzeichnet, dass** der Aufnahmeraum (3) zum Überführen der Mikropartikel (1) mit dem Fluid (4) gefüllt wird, insbesondere wobei ein Abdeckelement (5) des Aufnahmeraums zumindest teilweise durch das Fluid (4) benetzt wird.

3. Verfahren nach einem der vorhergehenden Ansprüche, **dadurch gekennzeichnet, dass** vor der Öffnung das Fluid (4) im Aufnahmeraum (3) entfernt wird.

4. Verfahren nach einem der vorhergehenden Ansprüche, **dadurch gekennzeichnet, dass** wenigstens eine Bewegungskomponente der Öffnungsbewegung längs einer durch das Abdeckelement (5) verschlossenen Öffnung (6) durchgeführt wird und/oder dass die Öffnung (6) an dem oder einem Abdeckelement (5) automatisiert geöffnet wird.

5. Verfahren nach einem der vorhergehenden Ansprüche, **dadurch gekennzeichnet, dass** die wenigstens eine Bewegungskomponente der Öffnungsbewegung außerhalb des Aufnahmeraums (3) durchgeführt wird, wobei die wenigstens eine Bewegungskomponente sich vorzugsweise um eine Rotationsachse (19) bewegt.

6. Verfahren nach einem der vorhergehenden Ansprüche, **dadurch gekennzeichnet, dass** eine zweite Bewegungskomponente an der ersten Bewegungskomponente angreift und vorzugsweise die erste Bewegungskomponente in eine Drehbewegung versetzt, insbesondere wobei die zweite Bewegungskomponente sich vorzugsweise um eine zweite Rotationsachse (23) bewegt und/oder wobei die erste und die zweite Bewegungskomponente sich vorzugsweise in gegensinnigen Drehbewegungen bewegen.

7. Verfahren nach einem der vorhergehenden Ansprüche, **dadurch gekennzeichnet, dass** wenigstens eine Bewegungskomponente vorzugsweise eine Zugbewegung durchführt, um ein vorzugweise als selbstklebende Abdeckfolie (10) ausgebildetes Abdeckelement (5) aus der Öffnung (6) zu entfernen.

8. Verfahren nach einem der vorhergehenden Ansprüche, **dadurch gekennzeichnet, dass** das Verfahren in einem fluidischen Kanalsystem (7), insbesondere in einer Mikrofluidik (8), durchgeführt wird.

9. Aufnahmeraum (3), insbesondere einer Mikrofluidik (8), zur optischen Aufzeichnung von Mikropartikeln (1) auf einer Membran (9), **dadurch gekennzeichnet, dass** der Aufnahmeraum (3) mit einem entfernbaren Abdeckelement (5) verschlossen ist.

10. Aufnahmeraum (3) nach Anspruch 9, **dadurch gekennzeichnet, dass** das Abdeckelement (5) als vorzugsweise selbstklebende Abdeckfolie (10) ausgebildet ist, insbesondere wobei die selbstklebende Abdeckfolie als Schlaufe (21) ausgebildet ist.

11. Aufnahmeraum (3) nach einem der vorhergehenden Vorrichtungsansprüche, **dadurch gekennzeichnet, dass** das Abdeckelement (5) wenigstens im Bereich einer Öffnung (6) des Aufnahmeraums (3) aus einem transparentem Material ausgebildet ist.

12. Aufnahmeraum (3) nach einem der vorhergehenden Vorrichtungsansprüche, **dadurch gekennzeichnet, dass** die Öffnung (6) so groß wie ein Bereitstellungsbereich (11) ist, in dem die Mikropartikel (1) bereitgestellt werden können.

13. Aufnahmeraum (3) nach einem der vorhergehenden Vorrichtungsansprüche, **dadurch gekennzeichnet, dass** das Abdeckelement (5) an einem Greifelement (12), insbesondere einem drehbaren und/oder schwenkbaren Arm (13), temporär oder dauerhaft befestigt ist.

14. Aufnahmeraum (3) nach einem der vorhergehenden Vorrichtungsansprüche, **dadurch gekennzeichnet, dass** das Greifelement (12) das Abdeckelement (5) vorzugsweise vollständig abdeckt.

15. Aufnahmeraum (3) nach einem der vorhergehenden Vorrichtungsansprüche, **dadurch gekennzeichnet, dass** eine bewegbare Vorrichtung (24) zumindest temporär an dem Greifelement (12) zum Entfernen des Abdeckelements (5) angreifen kann, insbesondere wobei ein Angriffspunkt zur Übertragung eines Drehmoments der bewegbaren Vorrichtung (24) auf das Greifelement (12)ausgebildet ist.

16. Aufnahmeraum (3) nach einem der vorhergehenden Vorrichtungsansprüche, **dadurch gekennzeichnet, dass** der Aufnahmeraum (3) einen Zulauf (14) und/oder Ablauf (15) hat, wobei die Membran (9) vorzugsweise zwischen Zulauf (14) und Ablauf (15) angeordnet ist.

17. Aufnahmeraum (3) nach einem der vorhergehenden Vorrichtungsansprüche, **dadurch gekennzeichnet, dass** der Zulauf (14) beabstandet zu dem Abdeckelement (5) in den Aufnahmeraum (3) mündet.

18. Aufnahmeraum (3) nach einem der vorhergehenden Vorrichtungsansprüche, **dadurch gekennzeichnet, dass** zwischen Zulauf (14) und Ablauf (15) der Aufnahmeraum (3) breiter ausgebildet ist.

19. Aufnahmeraum (3) nach einem der vorhergehenden Vorrichtungsansprüche, **dadurch gekennzeichnet, dass** der Aufnahmeraum (3) eine Entlüftungsstruktur (25) aufweist, die zumindest teilweise außerhalb der Öffnung (6) vorzugsweise in eine zur Öffnung (6) verschiedenen Ebene ragt, insbesondere wobei die Entlüftungsstruktur (25) durch das Abdeckelement (5) verschließbar ist.

20. Aufnahmeraum (3) nach einem der vorhergehenden Ansprüche, **dadurch gekennzeichnet, dass** sich der Aufnahmeraum (3) in einem fluidischen Kanalsystem (7) befindet, insbesondere wobei der Aufnahmeraum (3) als Teil einer Mikrofluidik (8) ausgebildet ist, wobei die Mikrofluidik (8) vorzugsweise als Teil eines scheibenförmigen Probenträgers (16) ausgebildet ist.

21. Verwendung einer drehbaren und/oder schwenkbaren Bewegungskomponente zur Entfernung eines Abdeckelements (5) vor einer Aufzeichnung, vorzugsweise in einem Aufnahmeraum (3) nach einem auf einen Aufnahmeraum (3) gerichteten Anspruch und/oder bei einem auf ein Anspruch gerichtetes Verfahren.
